(19) Europäisches Patentamt
European Patent Office
Office européen des brevets

(11) EP 3 136 200 B1

(12) EUROPEAN PATENT SPECIFICATION

(45) Date of publication and mention
of the grant of the patent:
10.10.2018 Bulletin 2018/41

(51) Int Cl.:
G06F 1/03 (2006.01)　　　　H04L 27/26 (2006.01)

(21) Application number: 15290224.3

(22) Date of filing: 26.08.2015

(54) **METHOD OF AND APPARATUS FOR PROVIDING A SAMPLE VECTOR REPRESENTING AT LEAST A PORTION OF A MULTI-CARRIER MODULATED SIGNAL**

VERFAHREN UND VORRICHTUNG ZUR BEREITSTELLUNG EINES PROBENVEKTORS, DER MINDESTENS EINEN ABSCHNITT EINES MODULIERTEN MEHRTRÄGERSIGNALS REPRÄSENTIERT

PROCÉDÉ ET APPAREIL POUR FOURNIR UN VECTEUR ÉCHANTILLON REPRÉSENTANT AU MOINS UNE PARTIE D'UN SIGNAL MODULÉ À PORTEUSES MULTIPLES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
01.03.2017 Bulletin 2017/09

(73) Proprietor: Alcatel Lucent
91620 Nozay (FR)

(72) Inventors:
• Wild, Thorsten
70435 Stuttgart (DE)
• Schaich, Frank
70435 Stuttgart (DE)

(74) Representative: Wetzel, Emmanuelle
Alcatel-Lucent
Intellectual Property Business Group
70430 Stuttgart (DE)

(56) References cited:
WO-A2-2014/153370　　US-A1- 2008 123 515

• Rao, K.R.Kim, D.N.Hwang, J.-J.: "Fast Fourier Transform - Algorithms and Applications", 1 January 2011 (2011-01-01), Springer, XP002754014, ISBN: 9781402066290 * page 17 - page 17 *
• WILD THORSTEN ET AL: "A Reduced Complexity Transmitter for UF-OFDM", 2015 IEEE 81ST VEHICULAR TECHNOLOGY CONFERENCE (VTC SPRING), IEEE, 11 May 2015 (2015-05-11), pages 1-6, XP033167111, DOI: 10.1109/VTCSPRING.2015.7145643 [retrieved on 2015-07-01]

**Description**

**Field of the invention**

The invention relates to a method of providing a sample vector representing at least a portion of a multi-carrier modulated signal which comprises at least one subband, wherein said subband comprises a plurality of subcarriers.
The invention also relates to an apparatus for providing a multi-carrier modulated signal.

**Background**

Multi-carrier modulated signals are widely used in telecommunications. Today's dominating wireless physical layer waveform is cyclic-prefix (CP-) orthogonal frequency division multiplexing (OFDM). It is used in fourth generation (4G) cellular systems like LTE(-A), as well as in IEEE 802.11 standards. A drawback of CP-OFDM is its spectral property of high side lobe levels. As a consequence, CP-OFDM has to be operated in strict time-frequency alignment in order to avoid inter-carrier interference.
Schaich, F.; Wild, T.; Chen, Y.; "Waveform contenders for 5G - suitability for short packet and low latency transmissions," in proceedings of IEEE Veh. Technol. Conf. Spring (VTC'14 Spring), May 2014, ([reference 1]) discloses three candidate multicarrier waveforms for the air interface of fifth generation (5G) networks. According to this publication, Universal Filtered Multi-Carrier (UFMC), which is also denoted as Universal Filtered Orthogonal Frequency Division Multiplexing, UF-OFDM, seems to be a promising 5G waveform candidate.

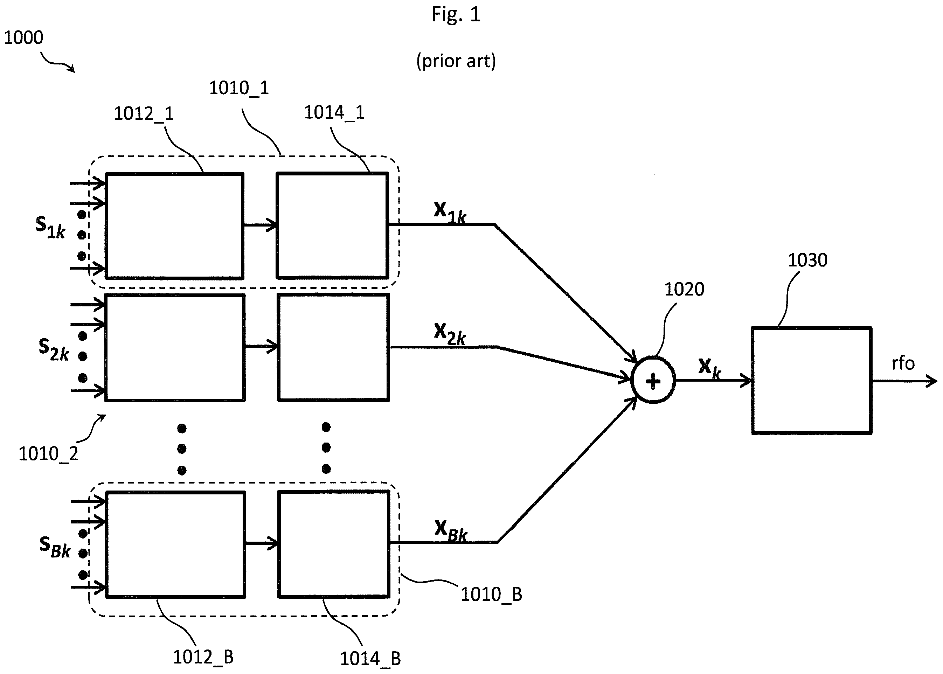

Fig. 1 depicts a block diagram of a conventional transmitter chain 1000 for UF-OFDM in an uplink (UL) configuration. B many UF-OFDM sub-modules 1010_1, 1010_2, .., 1010_B are provided, each of which receives e.g. QAM (quadrature amplitude modulation) - modulated symbols $S_{1k}$, .., $s_{Bk}$, wherein the index k represents a specific user, and each of which outputs a respective time domain transmit vector $\mathbf{x}_{1k}$, $\mathbf{x}_{2k}$, .. , $\mathbf{x}_{Bk}$ obtained depending on said QAM-modulated symbols in a manner explained in detail below.
The so obtained B many time domain transmit vectors $\mathbf{x}_{1k}$, .., $\mathbf{x}_{Bk}$ are superposed (i.e., added) by adder 1020, and the sum signal $\mathbf{x}_k$ obtained at an output of the adder 1020 is up-converted, e.g. to a radio frequency (RF) range, by means of up-conversion unit 1030, whereby a UF-OFDM modulated RF signal rfo is obtained. Optionally, said up-conversion unit 1030 may also perform further well-known RF processing such as filtering, amplification, and the like.
A detector (not shown) may receive the UF-OFDM modulated RF signal rfo which may also comprise noise and/or interference caused by the RF channel / other users/transmitters in a per se known manner. After conversion to a baseband frequency range, the received signal vector may be processed as known in the art to improve the received signal quality.
Referring back to Fig. 1, according to the conventional UF-OFDM technique described in the above mentioned paper of Schaich et al., the time domain transmit vector $\mathbf{x}_k$ for a particular multicarrier symbol of a user "k" is obtained as the superposition (cf. adder 1020) of sub-band-wise filtered components, with filter length L and FFT (Fast Fourier Transform) length N:

$$\mathbf{x}_k \;=\; \sum_{i=1}^{B} \boldsymbol{F}_{ik}\boldsymbol{V}_{ik}\boldsymbol{s}_{ik} \qquad\qquad \text{(equation 1),}$$

wherein $\mathbf{x}_k$ is a [(N+L-1) x 1] vector, i.e. a column vector having (N+L-1) many rows, wherein $\boldsymbol{F}_{ik}$ is a [(N+L-1) x N] matrix, wherein $\boldsymbol{V}_{ik}$ is a [N x $n_i$] matrix, and wherein $\boldsymbol{s}_{ik}$ is a [$n_i$ x 1] vector. For the sake of simplicity, a time index "m" is not considered in equation 1.
For each of the B many sub-bands, indexed i, $n_i$ many complex QAM symbols - gathered in $\mathbf{s}_{ik}$ - are transformed to time domain by an IDFT-matrix $\mathbf{V}_{ik}$. This is exemplarily depicted for the first sub-band (i=1) by IDFT spreader unit 1012_1. The IDFT-matrix $\mathbf{V}_{ik}$ includes the relevant columns of an inverse Fourier matrix according to the respective sub-band position (index "i") within the overall available frequency range. The matrix $\mathbf{F}_{ik}$ is a Toeplitz matrix, composed of a filter impulse response of a filter performing the linear convolution for filtering the time domain signals obtained by the IDFT-matrix $\mathbf{V}_{ik}$, wherein said filter functionality implementing said matrix $\mathbf{F}_{ik}$, or matrix $\mathbf{F}_{1k}$, for the first sub-band (i=1), respectively, is represented by said filter unit 1014_1.
In other words, UF-OFDM sub-module 1010_1 comprises the IDFT spreader unit 1012_1 and the filter unit 1014_1. The further UF-OFDM sub-modules 1010_2, .., 1010_B comprise a similar structure with a respective IDFT spreader unit (implementing IDFT-matrix $\mathbf{V}_{ik}$) and a respective filter unit (implementing matrix $\mathbf{F}_{ik}$), wherein - as stated above - IDFT-matrix $\mathbf{V}_{ik}$ includes the relevant columns of an inverse Fourier matrix according to the respective sub-band position "i" within the overall available frequency range, and wherein matrix $\mathbf{F}_{ik}$ comprises a suitable filter impulse response for each sub-band i.

By now, no efficient solution for an apparatus and a method capable of providing multicarrier modulated signals, especially of the UF-OFDM type, has been provided.

US 2008/123515 A1 discloses an OFDM transmitter that includes a lookup table for storing at least two groups of data digits associated with different respective characteristic frequencies.

WO 2014/153370 A2 discloses a spectrally efficient multi-carrier communication apparatus.

US 2008/123515 A1 discloses an OFDM transmitter that includes a lookup table for storing at least two groups of data digits associated with different respective characteristic frequencies.

WO 2014/153370 A2 discloses a spectrally efficient multi-carrier communication apparatus.

WILD THORSTEN ET AL: "A Reduced Complexity Transmitter for UF-OFDM", 2015 IEEE 81ST VEHICULAR TECHNOLOGY CONFERENCE (VTC SPRING), IEEE, 11 May 2015 (2015-05-11), pages 1-6, XP033167111, DOI: 10.1109/ VTCSPRING.2015.7145643 discloses a UF-OFDM transmitter with reduced complexity.

**Summary**

Hence, it is an object of the present invention to provide a method and apparatus for efficient generation of multi-carrier signals, e.g. of the UF-OFDM type or CP-OFDM type or the like.

This object is achieved by a method according to claim 1 and by a corresponding apparatus according to claim 7. Embodiments not covered by the scope of the claims should be understood as examples useful for understanding the invention.

The use of said first lookup table advantageously reduces the required complexity of an apparatus performing the method according to the embodiments and e.g. enables to provide terminals with reduced computational complexity. Depending on the type of pre-calculated data stored in said first lookup table, one or more table lookups may be performed, and optionally, several output sample vectors may be combined after retrieval from said first lookup table.

For example, as an output of the method according to the embodiments, an output sample vector may be obtained which basically corresponds to the time domain transmit vector $\mathbf{x}_{1k}$ as explained above with reference to Fig. 1. However, in contrast to the complex calculations required by the prior art approach, at least parts of these complex calculations are eliminated by providing the first lookup table according to the embodiments.

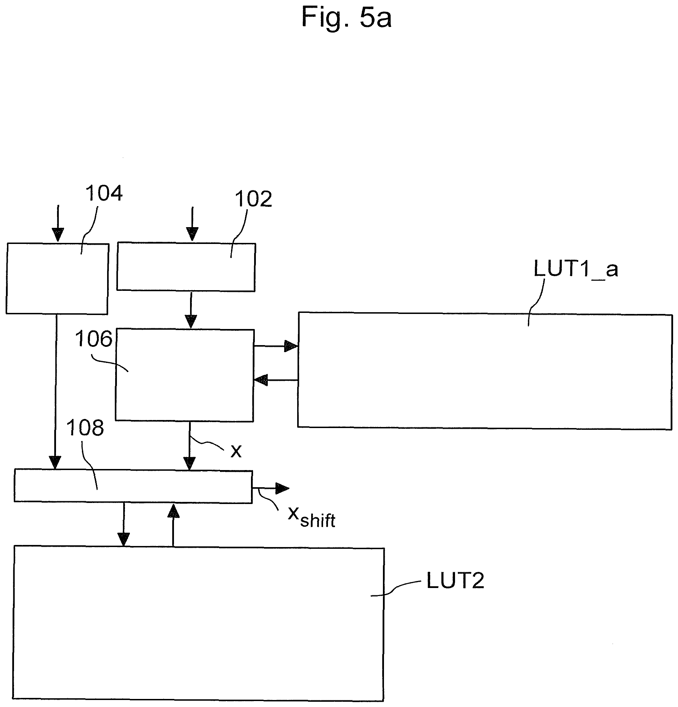

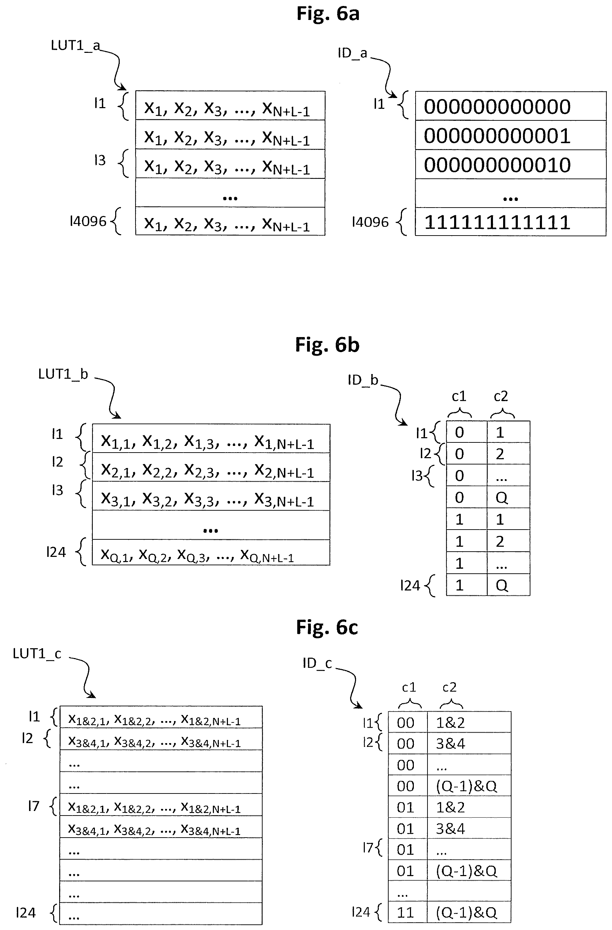

According to a first particularly preferred embodiment, which will be explained below with reference to Fig. 5a, 6a, said at least one lookup table may e.g. be used to provide an output sample vector x for a (complete) modulated subband, i.e. for all subcarriers of a respective subband. Such output sample vector corresponds to the time domain transmit vector $\mathbf{x}_{1k}$ as explained above with reference to Fig. 1.

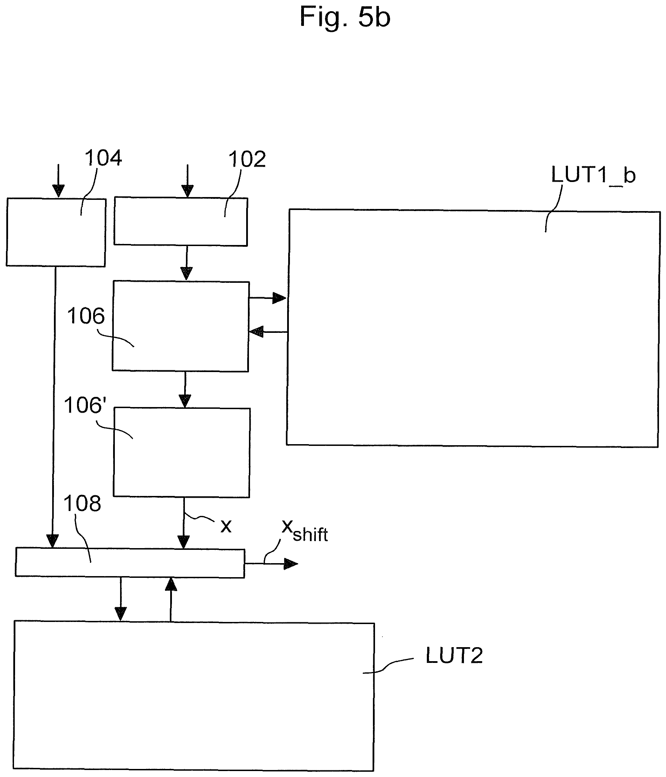

According to a second particularly preferred embodiment, which will be explained below with reference to Fig. 5b, 6b, alternatively, said at least one lookup table may be used to provide an output sample vector x for a single modulated subcarrier with a certain relative frequency position within a subband. In this case, if a resulting output sample vector for a complete subband is to be built, several table lookups may be beneficial, as well as combining the results of the several table lookups.

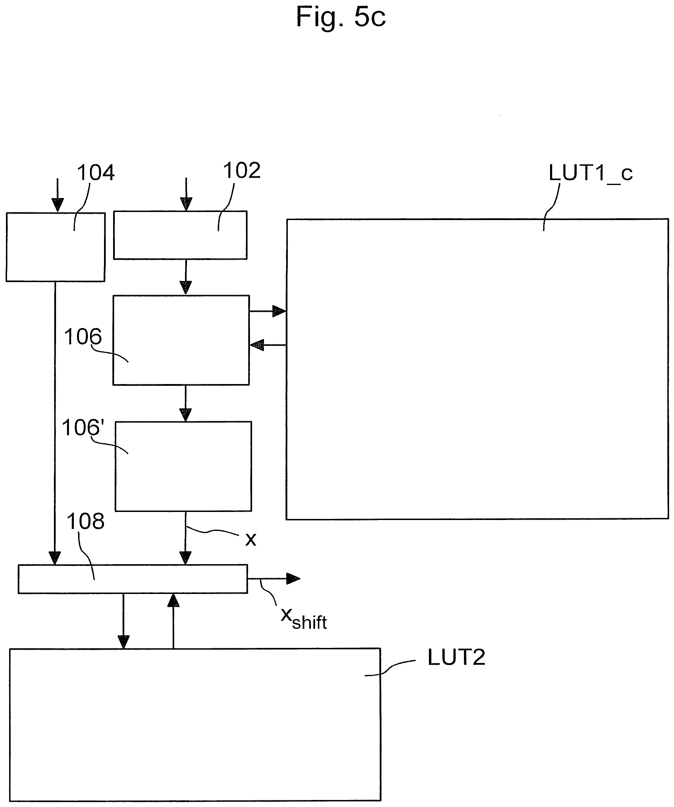

According to a third particularly preferred embodiment, which will be explained below with reference to Fig. 5c, 6c, alternatively, said at least one lookup table may be used to provide an output sample vector x for a group of several (i.e., two or more) modulated subcarriers with a certain relative frequency position within a subband. Again, In this case, if a resulting output sample vector for a complete subband is to be built, several table lookups may be beneficial, as well as combining the results of the several table lookups.

Advantageously, a frequency shift is carried out on said sample vector to obtain a frequency shifted sample vector, which enables to provide the desired multi-carrier modulated signal within an arbitrary subband frequency range. In other words, according to some embodiments, said first lookup table may comprise said output sample vectors as being pre-calculated for a specific prototypic subband, and the respective subcarriers of which represent relative sub-carrier "positions" within said prototypic subband. Whenever a desired subband is different from said prototypic subband, after the table lookup(s), the above mentioned frequency shift according to some embodiments may be carried out.

Advantageously, said frequency shift is performed by determining a complex frequency shift vector from a second lookup table, and by applying the Hadamard (i.e., elementwise) product on said sample vector and said complex frequency shift vector, whereby an efficient frequency shift is effected.

Advantageously, said complex frequency shift vector is determined from said second lookup table depending on a desired value for said frequency shift, e.g. a desired target subband the input data is to be modulated to.

According to a further preferred embodiment, said first lookup table comprises a. output sample vectors for at least one modulated subband, and/or b. output sample vectors for at least one single modulated subcarrier with a certain relative frequency position within a subband, and/or c. output sample vectors for a group of several, i.e., two or more, modulated subcarriers with a certain relative frequency position within a subband.

According to further embodiments, said first lookup table may comprise only output sample vectors for each single category of the above paragraphs a., b., c. However, according to other embodiments, said first lookup table may also comprise output sample vectors of different ones of said categories of the above paragraphs a., b., c.

According to a further preferred embodiment, said first lookup table comprises $M^Q$ many output sample vectors, wherein M is equal to or greater than 2, wherein Q is a positive integer and represents a number of subcarriers (sc) per subband, and wherein each of said $M^Q$ many output sample vectors of said fist lookup table (LUT1_a) is associated with a respective set of input data, wherein preferably said respective set of input data represents a specific combination of modulation symbols for said Q many subcarriers.

According to a preferred embodiment, M=2 may be chosen to reflect a BPSK modulation symbol table. According to a further preferred embodiment, Q=12 may be chosen, similar to standardized physical resource blocks (PRB) of existing LTE and/or LTE-Advanced communications systems. However, according to further embodiments, other values for M and/or Q may also be chosen. Still further, according to other embodiments, the first lookup table may also comprise less than $M^Q$ many output sample vectors, e.g. if it is tolerable that only a part of the theoretically possible permutations of modulation symbols for the Q many subcarriers may be looked up from said first lookup table. For instance, according to an embodiment, another portion of the theoretically possible permutations of modulation symbols for the Q many subcarriers, which may not be comprised in the lookup table, may be calculated if required.

According to a further preferred embodiment, said first lookup table comprises $M*Q$ many output sample vectors, wherein M is equal to or greater than 2, wherein Q is a positive integer and represents a number of subcarriers, and wherein each of said $M*Q$ many output sample vectors of said fist lookup table is associated with a respective set of input data, wherein preferably said respective set of input data represents a combination of a specific modulation symbol with a specific subcarrier or a specific subcarrier position within the subband associated with said first lookup table.

According to a preferred embodiment, M=2 may be chosen to reflect a BPSK modulation symbol table. According to a further preferred embodiment, Q=12 may be chosen, similar to standardized physical resource blocks (PRB) of existing LTE and/or LTE-Advanced communications systems. However, according to further embodiments, other values for M and/or Q may also be chosen. Still further, according to other embodiments, the first lookup table may also comprise less than $M*Q$ many output sample vectors, e.g. if it is tolerable that only a part of the theoretically possible permutations of modulation symbols/subcarriers may be looked up from said first lookup table.

According to a further preferred embodiment, said first lookup table comprises $(M^P)*(Q/P)$ many output sample vectors, wherein M is equal to or greater than 2, wherein Q is a positive integer and represents an overall number of subcarriers per subband, wherein P is a positive integer and represents a number of subcarriers per subcarrier group, and wherein each of said $(M^P)*(Q/P)$ many output sample vectors of said fist lookup table is associated with a respective set of input data, wherein preferably said respective set of input data represents a specific combination of P many modulation symbols for said P many subcarriers per subcarrier group.

According to a preferred embodiment, M=2 may be chosen to reflect a BPSK modulation symbol table. According to a further preferred embodiment, Q=12 may be chosen, similar to standardized physical resource blocks (PRB) of existing LTE and/or LTE-Advanced communications systems. According to a further preferred embodiment, P=2 may be chosen. However, according to further embodiments, other values for M and/or Q and/or P may also be chosen. Still further, according to other embodiments, the first lookup table may also comprise less than $(M^P)*(Q/P)$ many output sample vectors, e.g. if it is tolerable that only a part of the theoretically possible permutations of P-tuples of modulation symbols for the P many subcarriers may be looked up from said first lookup table.

According to a further embodiment, it is also possible to provide said first lookup table in a way which comprises output sample vectors for different groups of subcarriers, wherein at least two groups of subcarriers comprise a different number of subcarriers each. For example, in this case, according to an example, the first lookup table could comprise a first number of output sample vectors which first number is associated with a respective first set of input data, wherein preferably said respective first set of input data represents a specific combination of P1 many modulation symbols for said P1 many subcarriers per (first) subcarrier group, and wherein the (same) first lookup table could comprise a second number of output sample vectors which second number is associated with a respective second set of input data, wherein preferably said respective second set of input data represents a specific combination of P2 many modulation symbols for said P2 many subcarriers per (second) subcarrier group, wherein P1 is different from P2. In other words, the first lookup table may e.g. comprise several output sample vectors for subcarrier groups having e.g. P1=3 subcarriers and their associated modulation symbols, as well as several further output sample vectors for other subcarrier groups having e.g. P2=2 subcarriers and their associated modulation symbols, and the like. A further solution to the object of the present invention is provided by a method of operating a terminal for a mobile communications system, wherein said method of operating a terminal comprises a method of providing a sample vector according to the embodiments. Thus, a terminal may efficiently provide output sample vectors representing multi-carrier modulated signals and/or portions thereof.

Yet another solution to the object of the present invention is provided by an apparatus for providing a sample vector according to claim 7.

Advantageously, said apparatus is configured to carry out a frequency shift on said sample vector to obtain a frequency shifted sample vector.

Advantageously, said apparatus comprises a second lookup table, wherein said apparatus is configured to perform said frequency shift by determining a complex frequency shift vector from said second lookup table, and by applying the Hadamard product on said sample vector and said complex frequency shift vector.

Advantageously, said apparatus is configured to determine said complex frequency shift vector from said second lookup table depending on a desired value for said frequency shift.

According to a further embodiment, said first lookup table comprises $M^Q$ many output sample vectors, wherein M is equal to or greater than 2, wherein Q is a positive integer and represents a number of subcarriers per subband, and wherein each of said $M^Q$ many output sample vectors of said fist lookup table is associated with a respective set of input data, wherein preferably said respective set of input data represents a specific combination of modulation symbols for said Q many subcarriers.

According to a further embodiment, said first lookup table comprises $M*Q$ many output sample vectors, wherein M is equal to or greater than 2, wherein Q is a positive integer and represents a number of subcarriers, and wherein each of said $M*Q$ many output sample vectors of said fist lookup table is associated with a respective set of input data, wherein preferably said respective set of input data represents a specific combination of modulation symbols for said Q many subcarriers.

According to a further embodiment, said first lookup table comprises $(M^P)*(Q/P)$ many output sample vectors, wherein M is equal to or greater than 2, wherein Q is a positive integer and represents a number of subcarriers, and wherein each of said $(M^P)*(Q/P)$ many output sample vectors of said fist lookup table is associated with a respective set of input data, wherein preferably said respective set of input data represents a specific combination of modulation symbols for said Q many subcarriers.

A further solution to the object of the present invention is provided by a terminal for a mobile communications system, wherein said terminal comprises at least one apparatus according to the embodiments.

Yet another solution to the object of the present invention is provided by a base station for a mobile communications system, wherein said base station comprises at least one apparatus according to the embodiments.

## Brief description of the figures

Further features, aspects and advantages of the present invention are given in the following detailed description with reference to the drawings in which:

Figure 1 schematically depicts a block diagram of a conventional UF-OFDM transmitter,

Figure 2 schematically depicts a relative power in decibel over a frequency spacing in subcarrier steps of a multi-carrier modulated signal obtained according to the embodiments,

Figure 3 schematically depicts a simplified flowchart of a method according to an embodiment,

Figure 4 schematically depicts a simplified block diagram of an apparatus according to an embodiment,

Figure 5a schematically depicts a simplified block diagram of a further embodiment,

Figure 5b schematically depicts a simplified block diagram of a further embodiment,

Figure 5c schematically depicts a simplified block diagram of a further embodiment,

Figure 6a schematically depicts a first lookup table according to the embodiment of Fig. 5a,

Figure 6b schematically depicts a first lookup table according to the embodiment of Fig. 5b,

Figure 6c schematically depicts a first lookup table according to the embodiment of Fig. 5c, and

Figure 7 schematically depicts a terminal according to an embodiment.

## Description of the embodiments

Figure 1 schematically depicts a block diagram of a conventional UF-OFDM transmitter 1000 which has been explained in detail above.

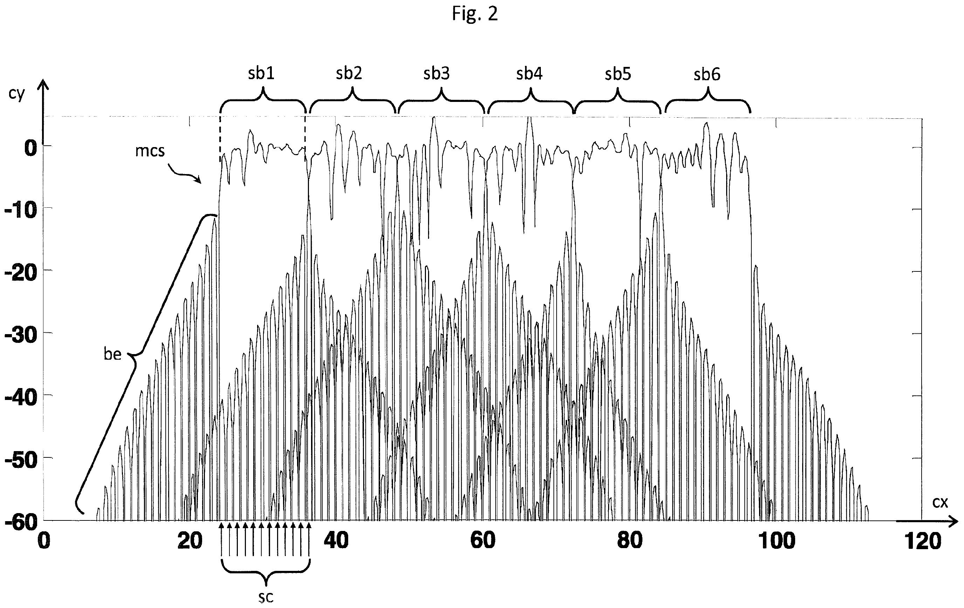

Figure 2 schematically depicts an exemplary multi-carrier modulated signal mcs of the UF-OFDM type which can be obtained by using the conventional UF-OFDM transmitter 1000 of figure 1 and which may also be obtained - in a more efficient fashion - by an apparatus and method according to the present embodiments as explained in detail below. More specifically, in figure 2, a horizontal axis cx represents a frequency spacing in units of 0.125 sub-carrier steps of the multi-carrier modulated signal mcs, and a vertical axis cy represents a relative power in decibel (dB).

As can be seen from figure 2, the multi-carrier modulated signal mcs exemplarily comprises six sub-bands sb1, sb2, .. , sb6, wherein each sub-band comprises an exemplary number of twelve sub-carriers sc. The sub-carriers sc are indicated for the first sub-band sb1 only for the reasons of clarity.

As can also be seen from figure 2, the individual sub-band signals, cf. e.g. sub-band sb1, comprise a particularly advantageous side lobe behavior (cf. the lower band edge be of the first sub-band's signal portion) in that the respective side lobes of the spectrum comprise a steep slope - as compared to conventional OFDM signals.

The principle according to the embodiments advantageously enables to obtain a multi-carrier modulated signal such as the exemplary signal mcs depicted by figure 2 with increased efficiency and with significantly decreased complexity as compared to the conventional system 1000 of Fig. 1.

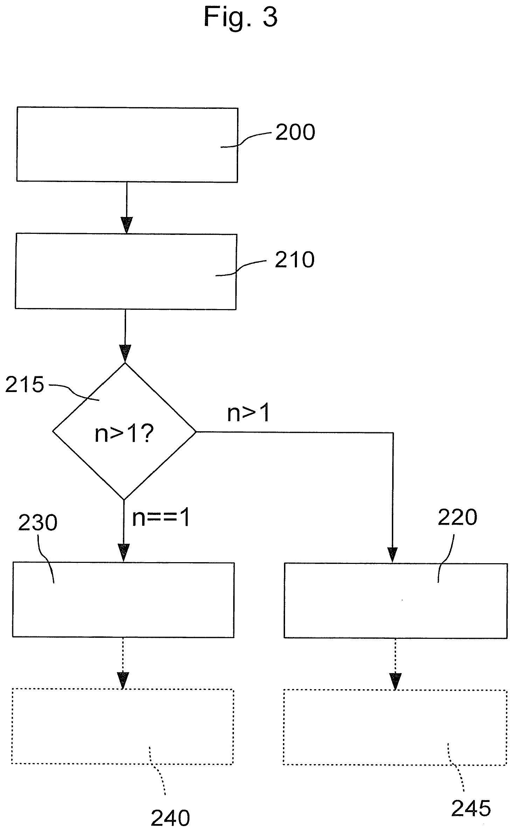

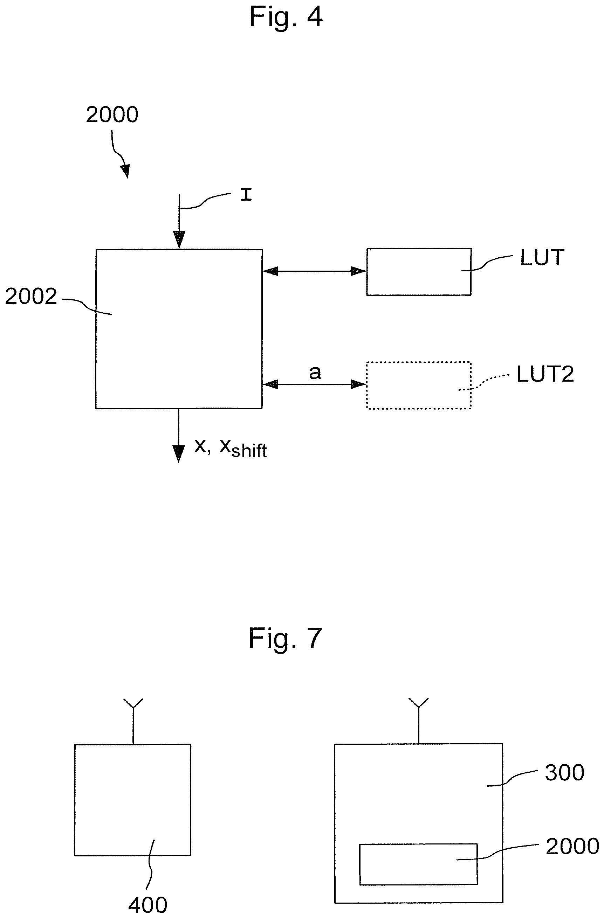

Figure 3 schematically depicts a simplified flowchart of a method according to an embodiment. The method serves to efficiently provide a sample vector similar to vector $\mathbf{x}_k$ of Fig. 1, representing at least a portion (e.g. a complete subband or several subcarriers of such subband) of a multi-carrier modulated signal mcs (Fig. 2) which comprises at least one subband sb1, wherein said subband sb1 comprises a plurality of subcarriers sc. The method according to Fig. 3 comprises the following steps: providing 200 a first lookup table LUT (Fig. 4), wherein said first lookup table comprises a predetermined first number of output sample vectors associated with respective sets of input data, obtaining 210 a predetermined second number of n many desired output sample vectors from said first lookup table, wherein n is equal to or larger than one (preferably, n is a positive integer number), wherein each of said desired output sample vectors is associated with a respective set of input data. Said input data may e.g. correspond to modulated symbols $s_{1k}$, .., $s_{Bk}$, as explained with reference to Fig. 1 above, or generally to any input data to be transmitted by means of said multi-carrier modulated signal mcs (Fig. 2) or a portion thereof. For example, said input data may also comprise binary data, e.g. one or more bit sequences. In other words, for specific portions of digital input data, the first lookup table according to the embodiments may comprise respective output sample vectors associated with said digital input data. Said output sample vectors may e.g. correspond to time domain transmit vectors, the contents of which may be upconverted to an RF range and transmitted via an air interface as explained above with reference to Fig. 1.

Further according to the embodiment of Fig. 3, if said predetermined second number n of desired output sample vectors is larger than one, which may be determined in the determining block 215, the method may proceed with combining 220 said n many desired output sample vectors to obtain a sum vector as said sample vector. According to an embodiment, n may e.g. be chosen greater than one, if the first lookup table does not store output sample vectors of complete subbands, but only of single subcarriers or groups of subcarriers. In this case, several table lookups may be required for aggregating a complete subband.

Otherwise, if said predetermined second number n of desired output sample vectors equals one (n==1), e.g. if the first lookup table does store output sample vectors of complete subbands, said single desired output sample vector may be obtained in step 230 as said sample vector.

The use of the lookup table in step 210 advantageously increases the efficiency of the overall procedure since the computational requirements for real-time or near-real-time calculations is greatly reduced, because respective calculations may be performed in advance (e.g., precalculation of the output sample vectors for at least some or all permutations of digital input data and/or modulation symbols together with a respective subcarrier position within a subband), and the results thereof may be provided in form of the first lookup table, which may be accessed during operation of the apparatus according to the embodiments.

Figure 4 schematically depicts a simplified block diagram of an apparatus 2000 according to an embodiment. The apparatus 2000 comprises a calculating unit 2002 which is configured to perform the steps of the method according to the embodiments, e.g. as explained above with reference to Fig. 3. Also, the apparatus 2000 may comprise a first lookup table LUT as explained above with reference to Fig. 3. The calculating unit 2002 may e.g. comprise a digital signal processor and/or a microcontroller and/or a field programmable gate array (FPGA) and/or an ASIC (application specific integrated circuit), and may optionally also comprise one or more lookup table(s) according to the embodiments.

Optionally, according to further embodiments, said apparatus 2000 may also comprise at least a second lookup table LUT2, which will be explained in detail below with reference to Fig. 5a, 5b, 5c.

Generally, according to the embodiments, said apparatus 2000 is configured to receive input data I (Fig. 4), which may comprise user input data that is to be transmitted by means of said multi-carrier modulated signal mcs (Fig. 2) or a portion thereof. According to some embodiments, in addition to said user input data, said input data I may also comprise subband control information on a desired subband position which indicates, within which one(s) of the subbands sb1, sb2, .. (Fig. 2) of the multi-carrier modulated signal mcs, the user input data is to be transmitted.

Depending on said input data I, said apparatus 2000 provides a sample vector x (Fig. 4) representing at least a portion of a multi-carrier modulated signal mcs, which is performed by utilizing the at least one lookup table.

According to an embodiment, which will be explained below with reference to Fig. 5a, 6a, said at least one lookup table may be used to provide a sample vector x for a (complete) modulated subband, i.e. for all subcarriers of a respective subband. In the context of Fig. 2, this may exemplarily correspond to providing a sample vector x for the subband sb1 (Fig. 2), including all presently 12 subcarriers sc of said subband sb1.

According to a further embodiment, which will be explained below with reference to Fig. 5b, 6b, said at least one lookup table may be used to provide a sample vector x for a single modulated subcarrier with a certain relative frequency position within a subband. In the context of Fig. 2, this may exemplarily correspond to providing a sample vector x for a single modulated subcarrier of the subband sb1 (Fig. 2).

According to a further embodiment, which will be explained below with reference to Fig. 5c, 6c, said at least one lookup table may be used to provide a sample vector x for a group of several (i.e., two or more) modulated subcarriers with a certain relative frequency position within a subband. In the context of Fig. 2, this may exemplarily correspond to providing a sample vector x for a group of several subcarriers of the subband sb1 (Fig. 2).

According to some embodiments, a frequency shift may be carried out on said sample vector x to obtain a frequency shifted sample vector $x_{shift}$. According to a preferred embodiment, said frequency shift may be carried out by the apparatus 2000, particularly by the calculating unit 2002. In this case, the frequency shifted sample vector $x_{shift}$ is obtained as an output of the apparatus 2000, instead of the sample vector x. According to an embodiment, frequency shifting as explained above is possible for any type of output sample vector, i.e. independent of whether a specific output sample vector x corresponds to a (complete) modulated subband, to a single modulated subcarrier of a subband, or to a group of several modulated subcarriers of a subband.

Returning to Fig. 3, the optional frequency shift is indicated by dashed blocks 240, 245.

According to a further embodiment, the frequency shift may correspond to one or more subbands of said multi-carrier modulated output signal. I.e., if the sample vector x has been obtained by the apparatus 2000 in a way wherein the user input data has been associated with a first subband sb1 (Fig. 2), the so obtained signal may be shifted to another subband sb2, sb3, ... by said optional step of frequency shifting.

According to a further embodiment, said frequency shift 240, 245 (Fig. 3) may be performed by determining a complex frequency shift vector a from said second lookup table LUT2 (Fig. 4), and by applying the Hadamard product on said sample vector x to be shifted and on said complex frequency shift vector a.

According to a further embodiment, said complex frequency shift vector a may be determined from said second lookup table LUT2 depending on a desired value for said frequency shift, wherein said desired value may e.g. comprise a frequency shift value represented by a positive integer number indicating by how many subbands a sample vector x should be frequency shifted.

Fig. 7 depicts a terminal 300 for a mobile communications system. Said terminal 300 advantageously comprises at least one apparatus 2000 (also cf. Fig. 4) according to the embodiments and is as such enabled to perform the method according to the embodiments. For example, the terminal 300 may efficiently generate - by employing the principle according to the embodiments, an output sample vector x corresponding to the vector $x_k$ of Fig. 1 or corresponding to a portion thereof (said portion representing only a single one or a group of several modulated subcarriers). Said output sample vector x may then be up-converted (i.e., frequency shifted to e.g. a radio frequency, RF, range of e.g. 1 or 2 GHz (Gigahertz)) by means of an up-conversion unit 1030, whereby a UF-OFDM modulated RF signal rfo is obtained for transmission over an air interface.

According to further embodiments, it is also possible to provide a base station 400 with at least one apparatus 2000 according to the embodiments.

According to some embodiments, promising 5G candidate waveforms are multi-carrier waveforms. Besides CP-OFDM, the most prominent candidate solutions are filtered multi-carrier waveforms, which are some filtered variant of OFDM (either based on zero postfix (ZP) or cyclic prefix (CP)): Universal Filtered Multi-Carrier (UFMC), also known as UF-OFDM; or f-OFDM. Typically subband-wise filtering may be used in those candidate waveforms. All candidates furthermore may additionally use DFT-spreading for generating an SC-FDMA signal.

The principle according to the embodiments enables to provide a low complexity transmitter implementation for generating a multi-carrier modulation part of e.g. a digital baseband signal. Such technique may be applied in the terminal 300 (Fig. 7) as well as in the base station 400.

According to some embodiments, a sample vector of a UF-OFDM signal in the time domain at time instant k (the time index variable k being equal to or greater than zero) of one subband (e.g., sb1 of Fig. 2) indexed by integer number i can be written as

$$\mathbf{x}_k = \sum_{i=1}^{B} \boldsymbol{F}_{ik} \boldsymbol{V}_{ik} \boldsymbol{P}_{ik} \boldsymbol{D}_{ik} \boldsymbol{s}_{ik} \qquad \text{(equation 2),}$$

where s is a modulation symbol input vector having $n_i$ many rows (wherein $n_i$ corresponds to a number of subcarriers) and one column, wherein $D_{ik}$ is a matrix with $n_i$ many rows and $n_i$ many columns which carries out a DFT spreading, especially in case of SC-FDMA (single carrier frequency division multiple access), wherein $P_{ik}$ is a diagonal matrix with $n_i$ many rows and $n_i$ many columns for precoding a subband frequency response (e.g., for a flat pass-band), wherein $V_{ik}$ is an iFFT (inverse Fast Fourier Transform) matrix with N many rows and $n_i$ many columns, wherein N is the number of iFFT points applied in the iFFT, and wherein $F_{ik}$ is a Toeplitz matrix with (N+L-1) rows and N columns for convolution by a subband FIR filter, wherein L corresponds to a filter length of said FIR filter. Consequently, the overall modulation matrix $T_{UF}$ for one subband (e.g., sb1 of Fig. 2, dropping the subcarrier index variable "i") is thus $T_{UF} = FVPD$.

For an unfiltered CP (cyclic prefix)-OFDM system with SC-FDMA, when **C** is a circulant matrix for carrying out the cyclic prefix, we can write instead for a corresponding overall modulation matrix $T_{CP} = CVD$ (i.e., matrix **P** is not needed).

Instead of fully evaluating equation (2) above during operation of the apparatus 2000 (Fig. 4), according to the embodiments, the first lookup table LUT (Fig. 4) comprises a predetermined first number of (pre-calculated) output sample vectors together with associated respective sets of input data. Hence, by performing a table lookup depending on said input data, corresponding output sample vectors may be obtained from said first lookup table LUT1.

In other words, according to some embodiments, said first lookup table LUT1 may comprise said output sample vectors as being pre-calculated for a specific prototypic subband (which corresponds to omitting the subband index variable i mentioned in equation 2, or choosing e.g. i=1), and the respective subcarriers of which represent relative subcarrier "positions" within said prototypic subband. Whenever a desired subband a signal is to be generated within is different from said prototypic subband, after the table lookup(s), the above mentioned frequency shift according to some embodiments may be carried out.

Fig. 5a schematically depicts a simplified block diagram according to an embodiment. The functionality of the block diagram 5a may e.g. be comprised - at least partly - in the apparatus 2000 as depicted by Fig. 4.

Block 102 represents an input of user data, e.g. in form of binary data, that is to be transmitted by means of a multi-carrier modulated signal mcs to be generated according to the embodiments.

Block 104 represents subband control information denoting a desired subband position which indicates, within which one(s) of the subbands sb1, sb2, .. (Fig. 2) of the multi-carrier modulated signal mcs, the user input data provided to block 102 is to be transmitted.

Block 106 performs a table lookup in the first lookup table LUT1_a, which may e.g. comprise a form as depicted by Fig. 6a.

According to the present embodiment, said first lookup table LUT1_a comprises M^Q many output sample vectors, wherein M is equal to or greater than 2, wherein Q is a positive integer and represents a number of subcarriers sc (Fig. 2) per subband, wherein each of said M^Q many output sample vectors of said fist lookup table LUT1_a is associated with a respective set of input data, wherein preferably said respective set of input data represents a specific combination of modulation symbols for said Q many subcarriers.

Presently, for example, M is chosen to equal 2, i.e. M=2, which e.g. corresponds to a BPSK (binary phase shift keying) modulation scheme. Presently, for example, Q is chosen to equal 12, i.e. Q=12, which means that there are Q=12 subcarriers per subband sb1, sb2, ... (Fig. 2). Hence, the first lookup table LUT1_a presently comprises M^Q = 2^12 = 4096 entries, e.g. lines, each of which comprises an output sample vector presently having (N+L-1) many complex-valued vector components each.

Presently, for example, N is chosen to equal 1024, i.e. N=1024, which denotes that 1024 points are used for the iFFT as explained above and as represented by the iFFT matrix $V_{ik}$ of equation 2 above. Presently, for example, L is chosen to equal 74, i.e. L=74, which denotes a filter length of the FIR filter as implemented by the Toeplitz matrix $F_{ik}$ and as explained above with reference of equation 2. Hence, presently, the output sample vector has (N+L-1)=1024+74-1=1097 many complex-valued vector components $x_1$, $x_2$, $x_3$, ..., $x_{1097}$ each.

For determining a desired output sample vector x (Fig. 5a), a table lookup in the first lookup table LUT1_a is made, which comprises determining which line of the first lookup table LUT1_a to consider, and which yields the respective output sample vector comprised in said line of said table LUT1_a.

Presently, the user input data of block 102 is used to determine which line of the first lookup table LUT1_a to consider. This is exemplarily depicted by the user input data table ID_a of Fig. 6a. It is to be noted that it is not required to generate or store such table ID_a when performing the method according to the embodiments. Rather, this table ID_a merely represents an index for accessing the first lookup table LUT1_a depending on the user input data.

Suppose that for a digital input data sequence of "000000000000", a corresponding output sample vector is to be looked up in said table LUT1_a. In this case, it is determined that line l1, i.e. the first line, of the first lookup table LUT1_a should be evaluated to obtain the proper corresponding output sample vector. Whereas, if a proper corresponding output sample vector is to be retrieved for a digital input data sequence of "111111111111", it is determined that line l4095, i.e. the last line, of the first lookup table LUT1_a should be evaluated, and the like.

As the first lookup table LUT1_a comprises pre-calculated values for potentially desired output sample vectors, the values of such desired output sample vectors may be easily looked up in said table during operation of the apparatus 2000 (Fig. 4) and they are not required to be calculated dynamically, e.g. according to equation 2 above. This saves a substantial amount of processing resources in the apparatus 2000 and hence enables to provide apparatuses 2000 with reduced complexity and power requirements.

The provisioning of the first lookup table LUT1_a may also be considered as pre-calculating for a single prototype frequency subband equation 2 as listed above and storing the results of such calculation in the first lookup table LUT1_a.

Optionally, according to a further embodiment, when pre-calculating the prototype subband for storage in the first lookup table LUT1_a, RF (radio frequency) pre-processing techniques such as e.g. clipping, extra filtering, may also be applied to the so obtained prototype subband.

After the table lookup of block 106 (Fig. 5a), as a result, the desired output sample vector x for a whole subband is obtained. Optionally, a frequency shift may be carried out on said output sample vector x by means of block 108, whereby a frequency shifted output sample vector $x_{shift}$ is obtained. This is particularly beneficial if the desired subband for output of the modulated user input data is different from the prototype subband the first lookup table LUT1_a has been pre-calculated for.

For example, if the prototype subband for which the first lookup table has been pre-calculated for corresponds to the first subband sb1 of the multi-carrier modulated signal mcs of Fig. 2, but the resulting signal should be comprised in e.g. the second subband sb2, the above mentioned frequency shifting may be applied by means of block 108 of Fig. 5a. According to a further embodiment, by means of block 108 of Fig. 5a, frequency shifts of multiples of a subband bandwidth may be performed.

According to a further embodiment, said frequency shift is performed by determining a complex frequency shift vector a (Fig. 4) from the second lookup table LUT2, and by applying the Hadamard product on said sample vector x (Fig. 5a) and said complex frequency shift vector a. I.e., for applying the frequency shift by means of a so retrieved frequency shift vector a, it is multiplied element-wise in the sense of the Hadamard product with the respective output sample vector x, to obtain the frequency shifted output sample vector $x_{shift}$ (Fig. 5a) .

According to a further embodiment, said complex frequency shift vector a is determined from said second lookup table LUT2 depending on a desired value for said frequency shift.

For example, the frequency shift vector may comprise N+L-1 elements such as:

$$a = [1, e^{(j\varphi)}, e^{(j2\varphi)}, e^{(j3\varphi)}, \ldots, e^{(j^{(N+L-1)\varphi})}],$$

wherein $\varphi$ represents a continuous phase shift to shift the subband of the output sample vector x to the desired frequency position.

According to a further embodiment, if CP-OFDM signals are considered, only N many last samples (as opposed to N+L-1 many) of the frequency shift vector a are required to be considered as the application of the cyclic prefix (CP) implies a repetition of sample values.

The following paragraph evaluates the estimated memory consumption for the output sample vectors x in the embodiment according to Fig. 5a, i.e. the storage requirements of the first look up table LUT1_a. When considering CP-OFDM, there are $N*M^Q$ (N*M^Q) samples, with 2 bytes for each I/Q part (i.e., the real and imaginary part of the respective complex numbers embodied by the components x1, x2, .. of the output sample vector), N= 1024 (iFFT size, cf. above), M=2 (modulation type: BPSK), Q=12 (i.e., twelve subcarriers per subband):
1024*2^12*2*2=165777216≈16.7 Mbyte. When considering UF-OFDM, there are (N+L-1)*M^Q samples, with 2 bytes for each I/Q part, N=1024, L=74, M=2 (BPSK), Q=12; (1024+74-1)*2^12*2*2=17973248≈18 Mbyte.

The following paragraph evaluates the estimated memory consumption for frequency shift vector a, i.e. the second lookup table LUT2: When considering CP-OFDM: N*B samples (B is the number of potentially required frequency shifts), with 2 bytes for each I/Q part, N= 1024, B = 50: ≈200 kbyte, and when considering UF-OFDM: (N+L-1)*B samples (B is the number of potentially required frequency shifts), with 2 bytes for each I/Q part, N= 1024, B = 50: ≈214 kbyte.

Note that, according to an embodiment, bit flipping with negligible complexity can be used for sign changes in order to further reduce the number of shifts to be stored by storing the same vector for positive and negative frequency shifts. Also note that the memory consumption for the second lookup table LUT2 in the further embodiments explained below is substantially identical, so it is not mentioned there to avoid repetition.

The following paragraph evaluates the estimated total number of mathematical operations for the embodiment as explained above with reference to Fig. 5a. When considering CP-OFDM: 6*N (one complex multiplication requires 6 real operations); for example setting this is 17.6% of regular CP-OFDM (without SC-FDMA) complexity, and when considering UF-OFDM: 6*(N+L-1); for example setting this is 18.9% of unfiltered CP-OFDM complexity.

For the embodiment as explained above with reference to Fig. 5a, the required memory size grows exponential with parameter M in the basis. I.e., the memory requirements for QPSK modulation scheme with Q=6 subcarriers and for 16-QAM modulation scheme with 3 subcarriers are identical.

As a result, the embodiment as explained above with reference to Fig. 5a is particularly beneficial for "low-order" modulation schemes such as BPSK (M=2) or QPSK (M=4) with a few subcarriers (Q<=12). Of course, if sufficient memory for the lookup tables LUT1_a, LUT2 is available, higher order modulation schemes such as 16QAM or even 64QAM and higher numbers of subcarriers are also possible.

Fig. 5b schematically depicts a simplified block diagram according to a further embodiment. The functionality of the block diagram 5b may e.g. be comprised - at least partly - in the apparatus 2000 as depicted by Fig. 4.

Similar to the embodiment of Fig. 5a, block 102 of Fig. 5b represents an input of user data, e.g. in form of binary data, that is to be transmitted by means of a multi-carrier modulated signal mcs to be generated according to the embodiments. Block 104 represents subband control information denoting a desired subband position which indicates, within which one(s) of the subbands sb1, sb2, .. (Fig. 2) of the multi-carrier modulated signal mcs, the user input data provided to block 102 is to be transmitted.

Block 106 performs a table lookup in the first lookup table LUT1_b, which may e.g. comprise a form as depicted by Fig. 6b. According to the present embodiment, said first lookup table LUT1_b comprises M*Q many output sample vectors, wherein M is equal to or greater than 2, wherein Q is a positive integer and represents a number of subcarriers sc, and wherein each of said M*Q many output sample vectors of said fist lookup table LUT1_b is associated with a respective set of input data, wherein preferably said respective set of input data represents a specific combination of modulation symbols for said Q many subcarriers.

Presently, for example, M is chosen to equal 2, i.e. M=2, which e.g. corresponds to BPSK. Presently, for example, Q is chosen to equal 12, i.e. Q=12, which means that there are Q=12 subcarriers per subband sb1, sb2, ... (Fig. 2). Hence, the first lookup table LUT1_b presently comprises M*Q = 2*12 = 24 entries, e.g. lines, each of which comprises an output sample vector presently having (N+L-1) many complex-valued vector components each.

Presently, for example, and similar to the embodiment of Fig. 5a, N is chosen to equal 1024, i.e. N=1024, which denotes that 1024 points are used for the iFFT as explained above and as represented by the iFFT matrix $V_{ik}$ of equation (2) above. Presently, for example, L is chosen to equal 74, i.e. L=74, which denotes a filter length of the FIR filter as implemented by the Toeplitz matrix $F_{ik}$ and as explained above with reference to equation (2). Hence, presently, the output sample vector has (N+L-1)=1024+74-1=1097 many complex-valued vector components $x_1, x_2, x_3, ..., x_{1097}$ each.

For determining a desired output sample vector x (Fig. 5b), a table lookup in the first lookup table LUT1_b is made, which comprises determining which line of the first lookup table LUT1_b to consider, and which yields the respective output sample vector x comprised in said line of said table LUT1_b.

Presently, the user input data of block 102 is used to determine which line of the first lookup table LUT1_a to consider. This is exemplarily depicted by the user input data table ID_b of Fig. 6b. It is to be noted that it is not required to generate or store such table ID_b when performing the method according to the embodiments. Rather, this table ID_b merely represents the index for accessing the first lookup table LUT1_b depending on the user input data.

Suppose that for a digital input data corresponding to a modulation symbol of "0", associated with a relative subband position (i.e., a specific subcarrier frequency within a considered subband) of "2", a corresponding output sample vector is to be looked up in said first lookup table LUT1_b. In this case, it is determined that line l2, i.e. the second line, of the first lookup table LUT1_b should be evaluated to obtain the proper corresponding output sample vector $[X_{2,1}, X_{2,2}, X_{2,3}, ..., X_{2,N+L-1}]$, because said second line l2 corresponds to a modulation symbol of "0", cf. the first column c1 of the table ID_b, and to a relative subband position of "2", cf. the second column c2 of the table ID_b. Whereas, if a proper corresponding output sample vector is to be retrieved for a modulation symbol "1" associated with a relative subband position of value "Q", it is determined that line l24, i.e. the last line, of the first lookup table LUT1_b should be evaluated, cf. line l24 of the table ID_b, yielding the output sample vector $[X_{Q,1}, X_{Q,2}, X_{Q,3}, ..., X_{Q,N+L-1}]$.

As the first lookup table LUT1_b of Fig. 5b comprises pre-calculated values for potentially desired output sample vectors, the values of such desired output sample vectors may be easily looked up in said table during operation of the apparatus 2000 (Fig. 4) and they are not required to be calculated dynamically, e.g. according to equation 2 above. This saves a substantial amount of processing resources in the apparatus 2000 and hence enables to provide apparatuses 2000 with reduced complexity and power requirements.

However, in contrast to the embodiment of Fig. 5a, the first lookup table LUT1_b of Fig. 5b does not comprise a respective output sample vector for a complete subband. Rather, the first lookup table LUT1_b of Fig. 5b comprises respective output sample vectors per tuple (modulation symbol | subcarrier). In other words, if a complete subband of e.g. Q=12 subcarriers is to be evaluated by employing the embodiment of Fig. 5b, Q=12 many table lookups of the lookup table LUT1_b are to be performed (i.e., one lookup per subcarrier), whereby presently Q=12 output sample vectors are obtained, which are to be combined by combining block 106' to obtain a sum vector as said sample vector x.

According to the present embodiment of Fig. 5b, for example, an overall modulation matrix for one subband, $T_{UF} = FVPD$, is of dimension (N+L-1)xQ. The *m*-th column vector $t_m$ of $T_{UF}$ is attributed to the *m*-th modulation symbol input $s_m$. This embodiment solution now uses the individual column vectors $t_m$. For computing the contribution of the *m*-th modulation symbol to the overall prototype sample vector, first the modulation vector $s_m t_m$ is determined. Then, for providing the lookup table LUT1_b, all M many combinations of $s_m t_m$ are stored in the LUT. According to an alternative embodiment, the expression "$s_m t_m$" is computed online, i.e. in real-time or dynamically, saving memory but increasing processing complexity.

According to the present embodiment of Fig. 5b, for a given modulation input, the appropriate modulation vector $s_m t_m$ is read out from the LUT. Note that in the context of the present description, such modulation vector is also denoted as "output sample vector". Then all the modulation vectors or output sample vectors are added up, cf. the combiner 106' of Fig. 5b, up, and, optionally, a frequency shifting is performed by $x_{shifted} = x \cdot a$, if required. According to a further embodiment, for CP-OFDM only last N samples have to be stored and computed.

The provisioning of the first lookup table LUT1_b and a single table lookup therein may also be considered as pre-calculating for a single subcarrier of a single prototype frequency subband equation 2 as listed above and storing the results of such calculation in the first lookup table LUT1_b.

Optionally, according to a further embodiment, when pre-calculating the prototype subband for storage in the first lookup table LUT1_b, RF (radio frequency) pre-processing techniques such as e.g. clipping, extra filtering, may also be applied to the so obtained prototype subband.

After the multiple table lookups of block 106 and the combining block 106', as a result, the desired output sample vector x is obtained. Optionally, as already mentioned above, a frequency shift may be carried out on said output sample vector x by means of block 108, whereby a frequency shifted output sample vector $x_{shift}$ is obtained. This is particularly beneficial if the desired subband for output of the modulated user input data is different from the prototype subband the first lookup table LUT1_b has been pre-calculated for.

For example, if the prototype subband for which the first lookup table has been pre-calculated for corresponds to the first subband sb1 of the multi-carrier modulated signal mcs of Fig. 2, but the resulting signal should be comprised in e.g. the second subband sb2, the above mentioned frequency shifting may be applied by means of block 108 of Fig. 5b, similar to the procedure as already explained above with reference to Fig. 5a.

The following paragraph evaluates the estimated memory consumption for the output sample vectors x in the embodiment according to Fig. 5b, i.e. the storage requirements of the first look up table LUT1_b. When considering CP-OFDM, there are N*M*Q samples; with 2 bytes for each I/Q part, N= 1024, M=2 (BPSK), Q=12: ≈100 kbyte (64 QAM ≈3.2 Mbyte); and when considering UF-OFDM, there are (N+L-1)*M*Q samples; with 2 byte for each I/Q part, N= 1024, L=74, M=2 (BPSK), Q=12: ≈105 kbyte, (64 QAM ≈3.4 Mbyte.

The following paragraph evaluates the estimated total number of mathematical operations for the embodiment as explained above with reference to Fig. 5b. When considering CP-OFDM: 2*N*(Q-1)+6*N (one complex addition requires 2 real operations); for example setting this is 82.3% of regular CP-OFDM (without SC-FDMA) complexity. When considering UF-OFDM: 2*(N+L-1)*(Q-1)+6*(N+L-1); for example setting this is 88.2% of unfiltered CP-OFDM complexity.

Fig. 5c schematically depicts a simplified block diagram according to a further embodiment. The functionality of the block diagram 5c may e.g. be comprised - at least partly - in the apparatus 2000 as depicted by Fig. 4.

Similar to the embodiment of Fig. 5b, block 102 of Fig. 5c represents an input of user data, e.g. in form of binary data, that is to be transmitted by means of a multi-carrier modulated signal mcs to be generated according to the embodiments. Block 104 represents subband control information denoting a desired subband position which indicates, within which one(s) of the subbands sb1, sb2, .. (Fig. 2) of the multi-carrier modulated signal mcs, the user input data provided to block 102 is to be transmitted.

Block 106 performs a table lookup in the first lookup table LUT1_c, which may e.g. comprise a form as depicted by Fig. 6c. According to the present embodiment, said first lookup table LUT1_c comprises (M^P)*(Q/P) many output sample vectors, wherein M is equal to or greater than 2, wherein Q is a positive integer and represents an overall number of subcarriers sc per subband, wherein P is a positive integer and represents a number of subcarriers per subcarrier group, and wherein each of said (M^P)*(Q/P) many output sample vectors of said fist lookup table (LUT1_c) is associated with a respective set of input data, wherein preferably said respective set of input data represents a specific combination of P many modulation symbols for said P many subcarriers per subcarrier group.

Presently, for example, M is chosen to equal 2, i.e. M=2, which e.g. corresponds to BPSK. Presently, for example, Q is chosen to equal 12, i.e. Q=12, which means that there are Q=12 subcarriers per subband sb1, sb2, ... (Fig. 2). Also, presently, for example, P is chosen to equal 2, i.e. P=2, which means that there are two subcarriers per subcarrier group. Hence, the first lookup table LUT1_c according to Fig. 6c presently comprises (M^P)*(Q/P) = (2^2)*(12/2) = 4*6 = 24 entries, e.g. lines l1, .., l24, each of which comprises an output sample vector presently having (N+L-1) many complex-valued vector components each.

Presently, for example, and similar to the embodiment of Fig. 5b, N is chosen to equal 1024, i.e. N=1024, which denotes that 1024 points are used for the iFFT as explained above and as represented by the iFFT matrix $V_{ik}$ of equation (2) above. Presently, for example, L is chosen to equal 74, i.e. L=74, which denotes a filter length of the FIR filter as implemented by the Toeplitz matrix $F_{ik}$ and as explained above with reference to equation (2). Hence, presently, the output sample vector has (N+L-1)=1024+74-1=1097 many complex-valued vector components $x_1, x_2, x_3, ..., x_{1097}$ each.

For determining a desired output sample vector x (Fig. 5c), a table lookup in the first lookup table LUT1_c (Fig. 6c) is made, which comprises determining which line of the first lookup table LUT1_c to consider, and which yields the respective output sample vector comprised in said line of said table LUT1_c.

Presently, the user input data of block 102 is used to determine which line of the first lookup table LUT1_c to consider. This is exemplarily depicted by the user input data table ID_c of Fig. 6c. It is to be noted that it is not required to generate or store such table ID_c when performing the method according to the embodiments. Rather, this table ID_c merely represents the index for accessing the first lookup table LUT1_c depending on the user input data.

Suppose that for a digital input data corresponding to two modulation symbols of "00", associated with relative subband positions 1 and 2 (i.e., specific subcarrier frequencies within a considered subband), a corresponding output sample vector is to be looked up in said first lookup table LUT1_c. In this case, it is determined that line l1, i.e. the first line, of the first lookup table LUT1_c should be evaluated to obtain the proper corresponding output sample vector, because said first line l1 corresponds to a modulation symbol tuple of "00", cf. the first column c1, first line l1, of the table ID_c, and to relative subband positions of "1&2", cf. the second column c2, first line l1, of the table ID_c. Whereas, if a proper corresponding output sample vector is to be retrieved for a modulation symbol 2-tuple of "11" associated with relative subband positions of "Q-1" and "Q", it is determined that line l24, i.e. the last line, of the first lookup table LUT1_c should be evaluated, cf. line l24 of the table ID_c.

As the first lookup table LUT1_c of Fig. 5c comprises pre-calculated values for potentially desired output sample vectors, the values of such desired output sample vectors may be easily looked up in said table during operation of the apparatus 2000 (Fig. 4), and they are not required to be calculated dynamically, e.g. according to equation 2 above. This saves a substantial amount of processing resources in the apparatus 2000 and hence enables to provide apparatuses 2000 with reduced complexity and power requirements.

However, in contrast to the embodiment of Fig. 5a, the first lookup table LUT1_c of Fig. 5c does not comprise a respective output sample vector for a complete subband. Further, in contrast to the embodiment of Fig. 5b, the first lookup table LUT1_c of Fig. 5c neither comprises a respective output sample vector for a single subcarrier. Rather, the first lookup table LUT1_c of Fig. 5c comprises respective output sample vectors per P-tuple of (presently P=2) modulation symbols and (presently 2) subcarriers. In other words, if a complete subband of e.g. Q=12 subcarriers is to be evaluated by employing the embodiment of Fig. 5c, Q/P (i.e., presently six) many table lookups of the lookup table LUT1_c are to be performed, whereby presently six output sample vectors are obtained, which are to be combined by combining block 106' to obtain a sum vector as said sample vector x. For example, if, by using the lookup table LUT1_c of Fig. 6c, output sample vectors for a complete subband having Q=12 subcarriers are to be looked up, for instance for the modulation symbol tuple "00", six table lookups have to be performed, namely a first lookup for symbol tuple "00" in combination with subcarriers 1&2 (col. 2 of table ID_c), which yields line l1 of LUT1_c, a second lookup for the same symbol tuple "00", however now in combination with the further subcarriers 3&4 (col. 2 of table ID_c), which yields line l2 of LUT1_c, and so forth, up to a sixth lookup for the same symbol tuple "00", however now in combination with the further (and last two) subcarriers 11&12 ("Q&Q-1") (col. 2 of table ID_c), which yields line six (without reference sign) of LUT1_c. The six output sample vectors so obtained each represent a time domain signal portion for the respective two subcarriers together with the associated modulation symbol 2-tuple it has been pre-calculated for. Hence, if the overall output sample vector for the complete subband is to be obtained, a combination, i.e. addition, of these six output sample vectors may be performed in block 106' of Fig. 5c, which yields the desired sample vector x.

Optionally, as with the preceding embodiments explained above with reference to Fig. 5a, 5b, a frequency shift may be performed by block 108 of Fig. 5c, which may, according to an embodiment, also make use of a lookup table LUT2, the details of which have been explained above with reference to Fig. 5a.

The present embodiment according to Fig. 5c may be considered as a compromise between the embodiment of Fig. 5a and the embodiment of Fig. 5b in terms of memory usage and the requirement of lookup steps, which enables to balance complexity and memory requirements. By adjusting the amount of symbols (presently P=2) handled in one joint lookup table, here the first lookup table LUT1_c (Fig. 6c), the desired trade-off point can be adjusted.

According to a further embodiment, it is also possible to provide said first lookup table LUT1_c of Fig. 5c, 6c in a way which comprises output sample vectors for different groups of subcarriers, wherein at least two groups of subcarriers comprise a different number of subcarriers each. For example, in this case, according to an example, the first lookup table LUT1_c could comprise a first number of output sample vectors which first number is associated with a respective first set of input data, wherein preferably said respective first set of input data represents a specific combination of P1 many modulation symbols for said P1 many subcarriers per (first) subcarrier group, and wherein the (same) first lookup table could comprise a second number of output sample vectors which second number is associated with a respective second set of input data, wherein preferably said respective second set of input data represents a specific combination of P2 many modulation symbols for said P2 many subcarriers per (second) subcarrier group, wherein P1 is different from P2. In other words, the first lookup table may e.g. comprise several output sample vectors for subcarrier groups having e.g. P1=3 subcarriers and their associated modulation symbols, as well as several further output sample vectors for other subcarrier groups having e.g. P2=2 subcarriers and their associated modulation symbols, and the like. In this case, a complete first lookup table LUT1_c would comprise an overall number of output sample vectors different from the above explained example (said example having $(M^P)*(Q/P)$ many output sample vectors), inter alia depending on the respective size of subcarrier groups.

According to an embodiment, for the example of storing the first P many input symbols of a subband all $M^P$ many possible combinations of $s_1 t_1 + s_2 t_2 + ... + s_P t_P$ should be stored. Without loss of generality let us assume Q can be divided by P. Then, (Q/P-1) many complex additions need to be performed to generate the complete subband vector **x.** Then, optionally, as explained above, a frequency shift by $\mathbf{x}_{shifted} = \mathbf{x} \bullet \mathbf{a}$ may be carried out, wherein the operator "$\bullet$" denotes the Hadamard (i.e., elementwise) product of the output vector and the frequency shift vector **a.**

According to a further embodiment, for CP-OFDM (in contrast to the above considered UF-OFDM example) we again only have to store and compute the last N samples.

The following paragraph evaluates the estimated memory consumption for the output sample vectors x in the embodiment according to Fig. 5c, i.e. the storage requirements of the first look up table LUT1_c. When considering CP-OFDM, there are N*$M^P$*Q/P samples; with 2 bytes for each I/Q part, N=1024, M=2 (BPSK), Q=12, P=2: ≈100 kbyte (for 16 QAM ≈6.3 Mbyte, 64 QAM ≈100 Mbyte).

When considering UF-OFDM, there are (N+L-1)*$M^P$*Q/P samples, with 2 bytes for each I/Q part, N=1024, L=74, M=2 (BPSK), Q=12, P=2: ≈105 kbyte, (for 16 QAM ≈6.7 Mbyte, 64 QAM ≈107 Mbyte).

The following paragraph evaluates the estimated total number of mathematical operations for the embodiment as explained above with reference to Fig. 5c. When considering CP-OFDM, there are 2*N*(Q/P-1)+6*N operations (one complex addition requires 2 real operations); for example setting this is 29.4% of regular CP-OFDM (without SC-FDMA) complexity, and when considering UF-OFDM, there are 2*(N+L-1)*(Q/P-1)+6*(N+L-1) many operations; for example setting this is 31.5% of unfiltered CP-OFDM complexity.

Optionally, according to a further embodiment, when pre-calculating the output sample vectors for storage in the first lookup table LUT1_c, RF (radio frequency) pre-processing techniques such as e.g. clipping, extra filtering, may also be applied to the so obtained prototype subband.

The principle according to the embodiments provides an advantageous complexity reduction for providing 5G waveforms especially when low-end devices are used with smaller allocation bandwidths and more stringent processing capability limitations. The principle according to the embodiments provides a complexity reduction, ranging from factor 6 to 20% compared to conventional OFDM for generation of a subband and supports filtered multi-carrier waveforms at the price of a small required additional memory amount for providing the first lookup table LUT (and optionally the second lookup table LUT2).

The principle according to the embodiments may e.g. be applied in a part (transmitter of a terminal 300 or base station 400) of an air interface processing in 5G systems.

**Claims**

1. Method of providing a sample vector (x) representing at least a portion of a multi-carrier modulated signal (mcs) of the Orthogonal Frequency Division Multiplexing, OFDM, type which comprises at least one subband (sb1), wherein said subband (sb1) comprises a plurality of subcarriers (sc), comprising the following steps:

   - providing (200) a first lookup table (LUT; LUT1_a; LUT1_b; LUT1_c), wherein said first lookup table (LUT1_a; LUT1_b; LUT1_c) comprises a predetermined first number of output sample vectors associated with respective sets of input data,
   - obtaining (210) a predetermined second number of n many desired output sample vectors from said first lookup table (LUT1_a; LUT1_b; LUT1_c), wherein n is equal to or larger than one, wherein each of said desired output sample vectors is associated with a respective set of input data,
   - if said predetermined second number n of desired output sample vectors is larger than one, combining (220) said n many desired output sample vectors to obtain a sum vector as said sample vector (x),
   - and if said predetermined second number n of desired output sample vectors equals one, obtaining (230) said single desired output sample vector as said sample vector (x)

   , wherein a frequency shift (240, 245) is carried out on said sample vector (x) to obtain a frequency shifted sample vector ($x_{shift}$)
   , wherein said frequency shift (240, 245) is performed by determining a complex frequency shift vector (a) from a second lookup table (LUT2), and by applying the Hadamard product on said sample vector (x) and said complex frequency shift vector (a), wherein said complex frequency shift vector (a) is determined from said second lookup table (LUT2) depending on a desired value for said frequency shift.

2. Method according to claim 1, wherein said first lookup table (LUT1_a; LUT1_b; LUT1_c) comprises

a. output sample vectors (x) for at least one modulated subband (sb1), and/or

b. output sample vectors (x) for at least one single modulated subcarrier with a certain relative frequency position within a subband (sb1), and/or

c. output sample vectors (x) for a group of several, i.e., two or more, modulated subcarriers with a certain relative frequency position within a subband (sb1).

3. Method according to one of the claims 1 to 2, wherein said first lookup table (LUT1_a) comprises M^Q many output sample vectors, wherein M is equal to or greater than 2, wherein Q is a positive integer and represents a number of subcarriers (sc) per subband, and wherein each of said M^Q many output sample vectors of said fist lookup table (LUT1_a) is associated with a respective set of input data, wherein preferably said respective set of input data represents a specific combination of modulation symbols for said Q many subcarriers.

4. Method according to one of the claims 1 to 2, wherein said first lookup table (LUT1_b) comprises M*Q many output sample vectors, wherein M is equal to or greater than 2, wherein Q is a positive integer and represents a number of subcarriers (sc), and wherein each of said M*Q many output sample vectors of said fist lookup table (LUT1_b) is associated with a respective set of input data, wherein preferably said respective set of input data represents a combination of a specific modulation symbol with a specific subcarrier.

5. Method according to one of the claims 1 to 2, wherein said first lookup table (LUT1_c) comprises (M^P)*(Q/P) many output sample vectors, wherein M is equal to or greater than 2, wherein Q is a positive integer and represents an overall number of subcarriers (sc) per subband, wherein P is a positive integer and represents a number of subcarriers per subcarrier group, and wherein each of said (M^P)*(Q/P) many output sample vectors of said fist lookup table (LUT1_c) is associated with a respective set of input data, wherein said respective set of input data represents a specific combination of P many modulation symbols for said P many subcarriers per subcarrier group.

6. Method of operating a terminal for a mobile communications system, wherein said method comprises a method of providing a sample vector (x) according to one of the preceding claims.

7. Apparatus (2000) for providing a sample vector (x) representing at least a portion of a multi-carrier modulated signal (mcs) of the Orthogonal Frequency Division Multiplexing, OFDM, type which comprises at least one subband (sb1), wherein said subband (sb1) comprises a plurality of subcarriers (sc), said apparatus (2000) comprising a first lookup table (LUT1_a; LUT1_b; LUT1_c), wherein said first lookup table (LUT1_a; LUT1_b; LUT1_c) comprises a predetermined first number of output sample vectors (102a; 102b; 102c) associated with respective sets (104a) of input data, wherein said apparatus (2000) is configured to:

- obtain (210) a predetermined second number of n many desired output sample vectors from said first lookup table (100a; 100b; 100c), wherein n is equal to or larger than one, wherein each of said desired output sample vectors is associated with a respective set of input data,
- if said predetermined second number n of desired output sample vectors is larger than one, combine (220) said n many desired output sample vectors to obtain a sum vector as said sample vector (x),
- and if said predetermined second number n of desired output sample vectors equals one, obtain (230) said single desired output sample vector as said sample vector (x)

, wherein said apparatus (2000) is configured to carry out a frequency shift (240, 245) on said sample vector (x) to obtain a frequency shifted sample vector ($x_{shift}$)

, wherein said apparatus (2000) comprises a second lookup table (LUT2), and wherein said apparatus (2000) is configured to perform said frequency shift (240, 245) by determining a complex frequency shift vector (a) from said second lookup table (LUT2), and by applying the Hadamard product on said sample vector (x) and said complex frequency shift vector (a)

, wherein said apparatus (2000) is configured to determine said complex frequency shift vector (a) from said second lookup table (LUT2) depending on a desired value for said frequency shift.

8. Apparatus (2000) according to claim 7 , wherein said first lookup table (LUT1_a) comprises M^Q many output sample vectors, wherein M is equal to or greater than 2, wherein Q is a positive integer and represents a number of subcarriers (sc) per subband, and wherein each of said M^Q many output sample vectors of said fist lookup table (LUT1_a) is associated with a respective set of input data, wherein preferably said respective set of input data represents a specific combination of modulation symbols for said Q many subcarriers.

**9.** Apparatus (2000) according to claim 7, wherein said first lookup table (LUT1_b) comprises M*Q many output sample vectors, wherein M is equal to or greater than 2, wherein Q is a positive integer and represents a number of subcarriers (sc), and wherein each of said M*Q many output sample vectors of said fist lookup table (LUT1_b) is associated with a respective set of input data, wherein preferably said respective set of input data represents a specific combination of modulation symbols for said Q many subcarriers; and/or
wherein said first lookup table (LUT1_c) comprises (M^P)*(Q/P) many output sample vectors, wherein M is equal to or greater than 2, wherein Q is a positive integer and represents a number of subcarriers (sc), and wherein each of said (M^P)*(Q/P) many output sample vectors of said fist lookup table (LUT1_c) is associated with a respective set of input data, wherein preferably said respective set of input data represents a specific combination of modulation symbols for said Q many subcarriers.

**10.** Terminal (300) for a mobile communications system, wherein said terminal comprises at least one apparatus (2000) according to one of the claims 7 to 9.

**Patentansprüche**

**1.** Verfahren zum Bereitstellen eines Mustervektors (x), der mindestens einen Teil eines mcs-Signals (Multi-Carrier Modulated Signal) vom OFDM-Typ (Orthogonal Frequency Division Multiplexing) darstellt, welcher mindestens ein Unterband (sbl) umfasst, wobei besagtes Unterband (sbl) eine Vielzahl von Unterträgern (sc) umfasst, umfassend die folgenden Schritte:

- Bereitstellen (200) einer ersten Nachschlagetabelle (LUT; LUT1_a; LUT1_b; LUT1_c), wobei besagte erste Nachschlagetabelle (LUT1_a; LUT1_b; LUT1_c) eine vorbestimmte erste Anzahl von Ausgangsmustervektoren umfasst, die verbunden sind mit entsprechenden Sätzen von Eingabedaten
- Erhalten (210) einer vorbestimmten zweiten Anzahl von n gewünschten Ausgangsmustervektoren aus besagter ersten Nachschlagetabelle (LUT1_a; LUT1_b; LUT1_c), wobei n größer oder gleich 1 ist, wobei jeder besagter Ausgangsmustervektoren verbunden ist mit einem entsprechenden Satz von Eingangsdaten
- wenn besagte vorbestimmte zweite Anzahl n gewünschter Ausgangsmustervektoren größer 1 ist, Kombinieren (220) besagter n gewünschten Ausgangsmustervektoren zum Erhalten eines Summenvektors als besagten Mustervektor (x)
- und wenn besagte vorbestimmte zweite Anzahl n gewünschter Ausgangsmustervektoren gleich 1 ist, Erhalten (230) besagten einzelnen gewünschten Ausgangsmustervektors als besagten Mustervektor (x)

, wobei eine Frequenzverschiebung (240, 245) durchgeführt wird an besagtem Mustervektor (x) zum Erhalten eines frequenzverschobenen Mustervektors ($x_{shift}$),
wobei besagte Frequenzverschiebung (240, 245) durchgeführt wird durch Bestimmen eines komplexen Frequenzverschiebungsvektors (a) aus einer zweiten Nachschlagetabelle (LUT2), und durch Anwenden des Hadamard-Produkts auf besagten Mustervektor (x) und besagten komplexen Frequenzverschiebungsvektor (a), wobei besagter komplexe Frequenzverschiebungsvektor (a) bestimmt wird aus besagter zweiten Nachschlagetabelle (LUT2) in Abhängigkeit eines gewünschten Werts für besagte Frequenzverschiebung.

**2.** Verfahren nach Anspruch 1, wobei besagte erste Nachschlagetabelle (LUT1_a; LUT1_b; LUT1_c) umfasst

a. Ausgangsmustervektoren (x) für mindestens ein moduliertes Unterband (sbl), und/oder
b. Ausgangsmustervektoren (x) für mindestens einen einzelnen modulierte Unterträger mit einer bestimmten relativen Frequenzposition innerhalb eines Unterbandes (sbl), und/oder
c. Ausgangsmustervektoren (x) für eine Gruppe verschiedener, d. h. zwei oder mehr, modulierter Unterträger mit einer bestimmten relativen Frequenzposition innerhalb eines Unterbandes (sbl)

**3.** Verfahren nach einem der Ansprüche 1 bis 2, wobei besagte erste Nachschlagetabelle (LUT1_a) M^Q Ausgangsmustervektoren umfasst, wobei M größer oder gleich 2 ist, wobei Q eine positive ganze Zahl ist und eine Anzahl von Unterträgern (sc) pro Unterband darstellt, und wobei jeder besagter M^Q Ausgangsmustervektoren besagter ersten Nachschlagetabelle (LUT1_a) verbunden ist mit einem entsprechenden Satz von Eingangsdaten, wobei bevorzugt besagter entsprechender Satz von Eingangsdaten eine spezifische Kombination von Modulationssymbolen für besagte Q Unterträger darstellt.

**4.** Verfahren nach einem der Ansprüche 1 bis 2, wobei besagte erste Nachschlagetabelle (LUT1_b) M*Q Ausgangsmustervektoren umfasst, wobei M größer oder gleich 2 ist, wobei Q eine positive ganze Zahl ist und eine Anzahl von Unterträgern (sc) darstellt, und wobei jeder besagter M*Q Ausgangsmustervektoren besagter ersten Nachschlagetabelle (LUT1_b) verbunden ist mit einem entsprechenden Satz von Eingangsdaten, wobei bevorzugt besagter entsprechender Satz von Eingangsdaten eine spezifische Kombination eines Modulationssymbols mit einem spezifischen Unterträger darstellt.

5. Verfahren nach einem der Ansprüche 1 bis 2, wobei besagte erste Nachschlagetabelle (LUT1_c) $(M^P)*(Q/P)$ Ausgangsmustervektoren umfasst, wobei M größer oder gleich 2 ist, wobei Q eine positive ganze Zahl ist und eine Gesamtanzahl von Unterträgern (sc) pro Unterband darstellt, und wobei P eine positive ganze Zahl ist und eine Anzahl von Unterträgern pro Unterträgergruppe darstellt, und wobei jeder besagter $(M^P)*(Q/P)$ Ausgangsmustervektoren besagter ersten Nachschlagetabelle (LUT1_c) verbunden ist mit einem entsprechenden Satz von Eingangsdaten, wobei besagter entsprechender Satz von Eingangsdaten eine spezifische Kombination von P Modulationssymbolen für besagte P Unterträger pro Unterträgergruppe darstellt.

6. Verfahren zum Betreiben eines Anschlusses für ein mobiles Kommunikationssystem, wobei besagtes Verfahren umfasst ein Verfahren zum Bereitstellen eines Mustervektors (x) nach einem der vorhergehenden Ansprüche.

7. Vorrichtung (2000) zum Bereitstellen eines Mustervektor (x), der mindestens einen Teil eines mcs-Signals (Multi-Carrier Modulated Signal) vom OFDM-Typ (Orthogonal Frequency Division Multiplexing) darstellt, welcher mindestens ein Unterband (sbl) umfasst, wobei besagtes Unterband (sbl) eine Vielzahl von Unterträgern (sc) umfasst, wobei besagte Vorrichtung (2000) eine erste Nachschlagetabelle (LUT1_a; LUT1_b; LUT1_c) umfasst, wobei besagte erste Nachschlagetabelle (LUT1_a; LUT1_b; LUT1_c) umfasst eine vorbestimmte erste Anzahl von Ausgangsmustervektoren (102a; 102b; 102c), die verbunden sind mit entsprechenden Sätzen (104a) von Eingangsdaten, wobei besagte Vorrichtung (2000) konfiguriert ist zum:

- Erhalten (210) einer vorbestimmten zweiten Anzahl von n gewünschten Ausgangsmustervektoren aus besagter ersten Nachschlagetabelle (100a; 100b; 100c), wobei n größer oder gleich 1 ist, wobei jeder der besagten gewünschten Ausgangsmustervektoren verbunden ist mit einem entsprechenden Satz von Eingangsdaten
- wenn besagte vorbestimmte zweite Anzahl n gewünschter Ausgangsmustervektoren größer 1 ist, Kombinieren (220) besagter n gewünschten Ausgangsmustervektoren zum Erhalten eines Summenvektors als besagten Mustervektor (x)
- und wenn besagte vorbestimmte zweite Anzahl n gewünschter Ausgangsmustervektoren gleich 1 ist, Erhalten (230) besagten einzelnen gewünschten Ausgangsmustervektors als besagten Mustervektor (x)

, wobei besagte Vorrichtung eine Frequenzverschiebung (2000) konfiguriert ist zum Ausführen einer Frequenzverschiebung (240, 245) an besagtem Mustervektor (x) zum Erhalten eines frequenzverschobenen Mustervektors ($x_{shift}$), wobei besagte Vorrichtung (2000) eine zweite Nachschlagetabelle (LUT2) umfasst, und wobei besagte Vorrichtung (2000) konfiguriert ist zum Durchführen besagter Frequenzverschiebung (240, 245) durch Bestimmen eines komplexen Frequenzverschiebungsvektors (a) aus besagter zweiten Nachschlagetabelle (LUT2), und durch Anwenden des Hadamard-Produkts auf besagten Mustervektor (x) und besagten komplexen Frequenzverschiebungsvektor (a), wobei besagte Vorrichtung (2000) konfiguriert ist zum Bestimmen besagten komplexen Frequenzverschiebungsvektors (a) aus besagter zweiter Nachschlagetabelle (LUT2) in Abhängigkeit von einem gewünschten Wert für besagte Frequenzverschiebung.

8. Vorrichtung (2000) nach Anspruch 7, wobei besagte erste Nachschlagetabelle (LUT1_a) $M^Q$ Ausgangsmustervektoren umfasst, wobei M größer oder gleich 2 ist, wobei Q eine positive ganze Zahl ist und eine Anzahl von Unterträgern (sc) pro Unterband darstellt, und wobei jeder besagter $M^Q$ Ausgangsmustervektoren besagter ersten Nachschlagetabelle (LUT1_a) verbunden ist mit einem entsprechenden Satz von Eingangsdaten, wobei bevorzugt besagter entsprechender Satz von Eingangsdaten eine spezifische Kombination von Modulationssymbolen für besagte Q Unterträger darstellt.

9. Vorrichtung (2000) nach Anspruch 7, wobei besagte erste Nachschlagetabelle (LUT1_b) M*Q Ausgangsmustervektoren umfasst, wobei M größer oder gleich 2 ist, wobei Q eine positive ganze Zahl ist und eine Anzahl von Unterträgern (sc) darstellt, und wobei jeder besagter M*Q Ausgangsmustervektoren besagter ersten Nachschlagetabelle (LUT1_b) verbunden ist mit einem entsprechenden Satz von Eingangsdaten, wobei bevorzugt besagter entsprechender Satz von Eingangsdaten eine spezifische Kombination von Modulationssymbolen für besagte Q Unterträger darstellt; und/oder wobei besagte erste Nachschlagetabelle (LUT1_c) $(M^P)*(Q/P)$ Ausgangsmustervektoren umfasst, wobei M größer oder gleich 2 ist, wobei Q eine positive ganze Zahl ist und eine Anzahl von Unterträgern (sc) darstellt, und wobei jeder besagte (M^P)*(Q/P) Ausgangsmustervektor besagter erster Nachschlagetabelle (LUT1_c) verbunden ist mit einem entsprechenden Satz von Eingangsdaten, wobei bevorzugt besagter entsprechender Satz von Eingangsdaten eine spezifische Kombination von Modulationssymbolen für besagte Q Unterträger darstellt.

10. Anschluss (300) für ein mobiles Kommunikationssystem, wobei besagter Anschluss mindestens eine Vorrichtung (2000) nach den Ansprüchen 7 bis 9 umfasst.

**Revendications**

1. Procédé de fourniture d'un vecteur échantillon (x) représentant au moins une partie d'un signal modulé à porteuses multiples (mcs) du type à multiplexage par répartition orthogonale de la fréquence, OFDM, qui comprend au moins une sous-bande (sb1), ladite sous-bande (sb1) comprenant une pluralité de sous-porteuses (sc), comprenant les étapes suivantes :

- fournir (200) une première table de consultation (LUT ; LUT1_a ; LUT1_b ; LUT1_c), ladite première table de consultation (LUT1_a ; LUT1_b ; LUT1_c) comprenant un premier nombre prédéterminé de vecteurs échantillons de sortie associés à des ensembles respectifs de données d'entrée,
- obtenir (210) un second nombre prédéterminé de n vecteurs échantillons de sortie souhaités à partir de ladite première table de consultation (LUT1_a ; LUT1_b ; LUT1_c), n étant supérieur ou égal à un, chacun desdits vecteurs échantillons de sortie souhaités étant associé à un ensemble respectif de données d'entrée,
- si ledit second nombre n prédéterminé de vecteurs échantillons de sortie souhaités est supérieur à un, combiner (220) lesdits n vecteurs échantillons de sortie souhaités pour obtenir un vecteur somme comme ledit vecteur échantillon (x),
- et si ledit second nombre n prédéterminé de vecteurs échantillons de sortie souhaités est égal à un, obtenir (230) ledit vecteur échantillon de sortie souhaité unique comme ledit vecteur échantillon (x),

un décalage de fréquence (240, 245) étant réalisé sur ledit vecteur échantillon (x) pour obtenir un vecteur échantillon décalé en fréquence ($x_{shift}$),
ledit décalage de fréquence (240, 245) étant réalisé en déterminant un vecteur à décalage de fréquence complexe (a) à partir d'une seconde table de consultation (LUT2), et en appliquant le produit d'Hadamard sur ledit vecteur échantillon (x) et sur ledit vecteur à décalage de fréquence complexe (a), ledit vecteur à décalage de fréquence complexe (a) étant déterminé à partir de ladite seconde table de consultation (LUT2) en fonction d'une valeur souhaitée pour ledit décalage de fréquence.

2. Procédé selon la revendication 1, dans lequel ladite première table de consultation (LUT1_a ; LUT1_b ; LUT1_c) comprend

a. des vecteurs échantillons de sortie (x) pour au moins une sous-bande modulée (sb1), et/ou
b. des vecteurs échantillons de sortie (x) pour au moins une sous-porteuse modulée unique ayant une certaine position de fréquence relative dans une sous-bande (sb1), et/ou
c. des vecteurs échantillons de sortie (x) pour un groupe de plusieurs, c'est-à-dire au moins deux, sous-porteuses modulées ayant une certaine position de fréquence relative dans une sous-bande (sb1).

3. Procédé selon l'une des revendications 1 à 2, dans lequel ladite première table de consultation (LUT1_a) comprend M^Q vecteurs échantillons de sortie, M étant supérieur ou égal à 2, Q étant un nombre entier positif et représentant un nombre de sous-porteuses (sc) par sous-bande, et chacun desdits M^Q vecteurs échantillons de sortie de ladite première table de consultation (LUT1_a) étant associé à un ensemble respectif de données d'entrée, ledit ensemble respectif de données d'entrée représentant de préférence une combinaison spécifique de symboles de modulation pour lesdites Q sous-porteuses.

4. Procédé selon l'une des revendications 1 à 2, dans lequel ladite première table de consultation (LUT1_b) comprend M*Q vecteurs échantillons de sortie, M étant supérieur ou égal à 2, Q étant un nombre entier positif et représentant un nombre de sous-porteuses (sc), et chacun desdits M*Q vecteurs échantillons de sortie de ladite première table de consultation (LUT1_b) étant associé à un ensemble respectif de données d'entrée, ledit ensemble respectif de données d'entrée représentant de préférence un symbole de modulation spécifique avec une sous-porteuse spécifique.

**5.** Procédé selon l'une des revendications 1 à 2, dans lequel ladite première table de consultation (LUT1_c) comprend $(M^P)*(Q/P)$ vecteurs échantillons de sortie, M étant supérieur ou égal à 2, Q étant un nombre entier positif et représentant un nombre global de sous-porteuses (sc) par sous-bande, P étant un nombre entier positif et représentant un nombre de sous-porteuses par groupe de sous-porteuses, et chacun desdits $(M^P)*(Q/P)$ vecteurs échantillons de sortie de ladite première table de consultation (LUT1_c) étant associé à un ensemble respectif de données d'entrée, ledit ensemble respectif de données d'entrée représentant une combinaison spécifique de P symboles de modulation pour lesdites P sous-porteuses par groupe de sous-porteuses.

**6.** Procédé de fonctionnement d'un terminal destiné à un système de communication mobile, ledit procédé comprenant un procédé de fourniture d'un vecteur échantillon (x) conformément à une des revendications précédentes.

**7.** Appareil (2000) de fourniture d'un vecteur échantillon (x) représentant au moins une partie d'un signal modulé à porteuses multiples (mcs) du type à multiplexage par répartition orthogonale de la fréquence, OFDM, qui comprend au moins une sous-bande (sb1), ladite sous-bande (sb1) comprenant une pluralité de sous-porteuses (sc), ledit appareil (2000) comprenant une première table de consultation (LUT1_a ; LUT1_b ; LUT1_c), ladite première table de consultation (LUT1_a ; LUT1_b ; LUT1_c) comprenant un premier nombre prédéterminé de vecteurs échantillons de sortie (102a ; 102b ; 102c) associés à des ensembles respectifs (104a) de données d'entrée, ledit appareil (2000) étant configuré pour :

- obtenir (210) un second nombre prédéterminé de n vecteurs échantillons de sortie souhaités à partir de ladite première table de consultation (100a ; 100b ; 100c), n étant supérieur ou égal à un, chacun desdits vecteurs échantillons de sortie souhaités étant associé à un ensemble respectif de données d'entrée,
- si ledit second nombre n prédéterminé de vecteurs échantillons de sortie souhaités est supérieur à un, combiner (220) lesdits n vecteurs échantillons de sortie souhaités pour obtenir un vecteur somme comme ledit vecteur échantillon (x),
- et si ledit second nombre n prédéterminé de vecteurs échantillons de sortie souhaités est égal à un, obtenir (230) ledit vecteur échantillon de sortie souhaité unique comme ledit vecteur échantillon (x),

ledit appareil (2000) étant configuré pour réaliser un décalage de fréquence (240, 245) sur ledit vecteur échantillon (x) pour obtenir un vecteur échantillon décalé en fréquence ($x_{shift}$),
ledit appareil (2000) comprenant une seconde table de consultation (LUT2) et ledit appareil (2000) étant configuré pour réaliser ledit décalage de fréquence (240, 245) en déterminant un vecteur à décalage de fréquence complexe (a) à partir de ladite seconde table de consultation (LUT2), et en appliquant le produit d'Hadamard sur ledit vecteur échantillon (x) et sur ledit vecteur à décalage de fréquence complexe (a),
ledit appareil (2000) étant configuré pour déterminer ledit vecteur à décalage de fréquence complexe (a) à partir de ladite seconde table de consultation (LUT2) en fonction d'une valeur souhaitée pour ledit décalage de fréquence.

**8.** Appareil (2000) selon la revendication 7, dans lequel ladite première table de consultation (LUT1_a) comprend $M^Q$ vecteurs échantillons de sortie, M étant supérieur ou égal à 2, Q étant un nombre entier positif et représentant un nombre de sous-porteuses (sc) par sous-bande, et chacun desdits $M^Q$ vecteurs échantillons de sortie de ladite première table de consultation (LUT1_a) étant associé à un ensemble respectif de données d'entrée, ledit ensemble respectif de données d'entrée représentant de préférence une combinaison spécifique de symboles de modulation pour lesdites Q sous-porteuses.

**9.** Appareil (2000) selon la revendication 7, dans lequel ladite première table de consultation (LUT1_b) comprend $M*Q$ vecteurs échantillons de sortie, M étant supérieur ou égal à 2, Q étant un nombre entier positif et représentant un nombre de sous-porteuses (sc), et chacun desdits $M*Q$ vecteurs échantillons de sortie de ladite première table de consultation (LUT1_b) étant associé à un ensemble respectif de données d'entrée, ledit ensemble respectif de données d'entrée représentant de préférence une combinaison spécifique de symboles de modulation pour lesdites Q sous-porteuses ; et/ou
ladite première table de consultation (LUT1_c) comprenant $(M^P)*(Q/P)$ vecteurs échantillons de sortie, M étant supérieur ou égal à 2, Q étant un nombre entier positif et représentant un nombre de sous-porteuses (sc), et chacun desdits $(M^P)*(Q/P)$ vecteurs échantillons de sortie de ladite première table de consultation (LUT1_c) étant associé à un ensemble respectif de données d'entrée, ledit ensemble respectif de données d'entrée représentant de préférence une combinaison spécifique de symboles de modulation pour lesdites Q sous-porteuses.

**10.** Terminal (300) destiné à un système de communication mobile, ledit terminal comprenant au moins un appareil (2000) selon l'une des revendications 7 à 9.

Fig. 1
(prior art)

Fig. 2

# Fig. 3

# Fig. 4

2000

I

2002

LUT

a
LUT2

x, x$_{shift}$

# Fig. 7

400

300

2000

# Fig. 5a

# Fig. 5b

# Fig. 5c

## Fig. 6a

LUT1_a

| |
|---|
| $X_1, X_2, X_3, ..., X_{N+L-1}$ |
| $X_1, X_2, X_3, ..., X_{N+L-1}$ |
| $X_1, X_2, X_3, ..., X_{N+L-1}$ |
| ... |
| $X_1, X_2, X_3, ..., X_{N+L-1}$ |

I1 { (row 1), I3 { (row 3), I4096 { (last row)

ID_a

| |
|---|
| 000000000000 |
| 000000000001 |
| 000000000010 |
| ... |
| 111111111111 |

I1 { (row 1), I4096 { (last row)

## Fig. 6b

LUT1_b

| |
|---|
| $X_{1,1}, X_{1,2}, X_{1,3}, ..., X_{1,N+L-1}$ |
| $X_{2,1}, X_{2,2}, X_{2,3}, ..., X_{2,N+L-1}$ |
| $X_{3,1}, X_{3,2}, X_{3,3}, ..., X_{3,N+L-1}$ |
| ... |
| $X_{Q,1}, X_{Q,2}, X_{Q,3}, ..., X_{Q,N+L-1}$ |

I1 {, I2 {, I3 {, I24 {

ID_b

| c1 | c2 |
|---|---|
| 0 | 1 |
| 0 | 2 |
| 0 | ... |
| 0 | Q |
| 1 | 1 |
| 1 | 2 |
| 1 | ... |
| 1 | Q |

I1{, I2{, I3{, I24 {

## Fig. 6c

LUT1_c

| |
|---|
| $X_{1\&2,1}, X_{1\&2,2}, ..., X_{1\&2,N+L-1}$ |
| $X_{3\&4,1}, X_{3\&4,2}, ..., X_{3\&4,N+L-1}$ |
| ... |
| ... |
| $X_{1\&2,1}, X_{1\&2,2}, ..., X_{1\&2,N+L-1}$ |
| $X_{3\&4,1}, X_{3\&4,2}, ..., X_{3\&4,N+L-1}$ |
| ... |
| ... |
| ... |
| ... |

I1 {, I2 {, I7 {, I24 {

ID_c

| c1 | c2 |
|---|---|
| 00 | 1&2 |
| 00 | 3&4 |
| 00 | ... |
| 00 | (Q-1)&Q |
| 01 | 1&2 |
| 01 | 3&4 |
| 01 | ... |
| 01 | (Q-1)&Q |
| ... | |
| 11 | (Q-1)&Q |

I1{, I2{, I7{, I24 {

**REFERENCES CITED IN THE DESCRIPTION**

**Patent documents cited in the description**

- US 2008123515 A1

- WO 2014153370 A2

**Non-patent literature cited in the description**

- **SCHAICH, F. ; WILD, T. ; CHEN, Y.** Waveform contenders for 5G - suitability for short packet and low latency transmissions. *proceedings of IEEE Veh. Technol. Conf. Spring (VTC'14 Spring),* May 2014